# EUROPÄISCHE PATENTANMELDUNG

(11) **EP 3 664 179 A1**
(43) Veröffentlichungstag der Anmeldung: **10.06.2020**
(21) Anmeldenummer: 18210391.1
(22) Anmeldetag: 05.12.2018
(51) Int. Cl.: H01M 2/02, H01M 2/34, H01M 10/04, H01M 2/10, H01M 10/48, H01M 10/647

(54) **AKKUPACKVORRICHTUNG UND VERFAHREN ZUM BETREIBEN DER AKKUPACKVORRICHTUNG**

(71) Anmelder: Hilti Aktiengesellschaft, 9494 Schaan (LI)
(72) Erfinder: Hukan, Mohammad, 86161 Augsburg (DE)
(74) Vertreter: Hilti Aktiengesellschaft Corporate Intellectual Property

(57) **Zusammenfassung**

Es wird eine Akkupackvorrichtung (1) für eine elektrische Handwerkzeugmaschine mit einer Gehäuseeinrichtung (10) und einem wenigstens eine Pouchzelle (21, 22, 23, 24) aufweisenden Akkupack (20). Dabei sind eine Detektiereinrichtung (50) mit einem an das Akkupack (20) gekoppelten Detektierelement (52) und einem gehäusefest angeordneten Sensor (51) vorgesehen, wobei der Sensor (51) zur Detektion des Detektierelements (52) bei Unterschreiten eines definierten Abstands zwischen dem Detektierelement (52) und dem Sensor (51) ausgeführt ist. Es wird weiterhin ein Verfahren zum Betreiben einer derartigen Akkupackvorrichtung (1) beschrieben.

## Beschreibung

Die vorliegende Erfindung betrifft eine Akkupackvorrichtung mit einer Gehäuseeinrichtung und einem wenigstens eine Pouchzelle aufweisenden Akkupack gemäß dem Oberbegriff des Patentanspruches 1 und ein Verfahren zum Betreiben einer derartigen Akkupackvorrichtung gemäß Patentanspruch 11.

Akkupacks, die mit einer oder mehreren Pouchzellen ausgeführt sind, sind grundsätzlich aus dem Stand der Technik bekannt. Während eines Betriebs von Pouchzellen auf Lithiumionenbasis bzw. des Akkupacks kann es beispielsweise im Rahmen eines Alterungsprozesses von Pouchzellen zur Gasbildung kommen. Diese Gase können beispielsweise bei einer Elektrolyt-Zersetzung oder aufgrund einer Belastung der Pouchzellen beispielsweise bei einer Überladung oder einer Überhitzung auftreten. Durch diese Gase baut sich innerhalb einer äußeren Hülle der Pouchzellen ein Druck auf und ein Volumen der Pouchzelle vergrößert sich. Erreicht oder übersteigt der Druck ein kritisches Drucklevel, kann hierdurch die äußere Hülle der Pouchzelle beschädigt werden und aufplatzen. Hierdurch wird auch die Gefahr des Auftretens eines Feuers stark erhöht.

Im Unterschied zu klassischen zylindrischen Zellen, die mit einer Stromunterbrechungseinrichtung ausgeführt sind, die Elektroden der Zelle bei Übersteigen eines definierten Innendrucks in der Zelle trennen, weisen bekannte Pouchzellen keine derartige Stromunterbrechungseinrichtung auf. Da eine äußere Hülle der Pouchzelle als Folie ausgeführt ist und daher keine große Robustheit aufweist, kann ein durch ein sogenanntes Swelling erhöhter Innendruck in der Pouchzelle zu einem Platzen der äußeren Hülle mit einem Gasaustritt führen.

Es ist Aufgabe der vorliegenden Erfindung eine Akkupackvorrichtung und ein Verfahren zum Betreiben einer Akkupackvorrichtung zur Verfügung zu stellen, wobei die Akkupackvorrichtung sicher betreibbar ist.

Diese Aufgabe wird mit einer Akkupackvorrichtung mit einer Gehäuseeinrichtung und einem wenigstens eine Pouchzelle aufweisenden Akkupack, dadurch gelöst, dass eine Detektiereinrichtung mit einem an das Akkupack bzw. wenigstens eine Pouchzelle gekoppelten Detektierelement und einem gehäusefest angeordneten Sensor vorgesehen sind, wobei der Sensor zur Detektion des Detektierelements bei Unterschreiten eines definierten Abstands zwischen dem Detektierelement und dem Sensor ausgeführt ist.

Eine erfindungsgemäß ausgeführte Akkupackvorrichtung ist sicher betreibbar, da mittels der Detektiereinrichtung eine Vergrößerung wenigstens einer Pouchzelle des Akkupacks größer als ein definierter Umfang detektierbar ist und darauf

Ein Ansteigen eines Innendrucks innerhalb einer äußeren Hülle einer Pouchzelle, beispielsweise durch eine Überladung, einen Kurzschluss oder infolge von Alterung, führt zu einem Aufblähen der Pouchzelle. Durch dieses Aufblähen vergrößert sich die Pouchzelle in einer Hauptrichtung, die insbesondere im Wesentlichen quer zu einer Haupterstreckungsrichtung der Pouchzelle angeordnet ist. Durch diesen als Swelling bezeichneten Vorgang kann es zu einer Beschädigung oder zu einem unkontrollierten Aufplatzen einer äußeren Hülle der Pouchzelle kommen. Dadurch entsteht ein erhöhtes Sicherheitsrisiko für den Anwender, da hierdurch Elektrolyt aus der äußeren Hülle der Pouchzelle austreten kann und durch einen Kontakt mit einer Zündquelle, beispielsweise einem eine hohe Temperatur aufweisenden Zellverbinder, entflammen kann. Zudem können durch die Beschädigung der äußeren Hülle der Pouchzelle unter Spannung stehende Bereiche der Pouchzelle frei zugänglich gemacht werden. Nach dem Aufplatzen funktioniert die Pouchzelle weiterhin, weshalb ein thermisches Durchgehen entstehen kann. Diese Nachteile sind auch einfache Weise mit einer erfindungsgemäß ausgeführten Akkupackvorrichtung verhindert werden.

Das Detektierelement ist insbesondere derart mit dem Akkupack bzw. einer Pouchzelle des Akkupacks gekoppelt, dass das Detektierelement bei einer Vergrößerung der wenigstens einen Pouchzelle in der Hauptrichtung in Richtung des Sensors verlagert wird und hierdurch ein Abstand zwischen dem Detektierelement und dem Sensor reduziert wird, so dass eine derartige Vergrößerung einer und/oder mehrere Pouchzellen des Akkupacks von dem Sensor detektierbar ist.

Das Detektierelement kann dabei ein separates Bauteil, welches direkt oder indirekt mit dem Akkupack oder einer Pouchzelle des Akkupack verbunden ist, oder beispielsweise direkt durch eine Pouchzelle des Akkupacks oder das Akkupack gebildet sein.

Ein insbesondere mit Lithium-Ionen Pouchzellen ausgeführter Akkupack weist eine hohe Leistungsfähigkeit auf und ist dabei leicht und kompakt zu gestalten. Pouchzellen bieten aufgrund ihres inneren Designs einen deutlich geringeren internen Widerstand als herkömmliche zylindrische Batteriezellen auf, wodurch höhere Entladeströme realisiert werden können, ohne den Akkupack zu überhitzen. Zugleich können Lithium-Ionen Pouchzellen in flexiblen Geometrien hergestellt werden, wodurch der Akkupack leicht und kompakt konstruiert werden kann.

Bei einer bevorzugten Ausführungsform der Akkupackvorrichtung ist die Detektiereinrichtung an einem plattenförmigen, an dem Akkupack anliegenden Element angeordnet, das gegenüber der Gehäuseeinrichtung verlagerbar ist und mit einer Wand der Gehäuseeinrichtung einen die wenigstens eine Pouchzelle aufweisenden Raum begrenzt. Das plattenförmige Element liegt insbesondere in der Hauptrichtung an der wenigstens einen Pouchzelle an, so dass bei einer Vergrößerung der wenigstens einen Pouchzelle in der Hauptrichtung das plattenförmige Element in der Hauptrichtung gegenüber der Wand der Gehäuseeinrichtung verlagert wird und auf den an einer anderen Wand der Gehäuseeinrichtung angeordneten Sensor zubewegt wird.

Bei einer alternativen Ausführung kann das Detektierelement auch direkt an dem Akkupack, beispielsweise an einer Pouchzelle des Akkupacks, angebunden sein. Auch bei einer derartigen Ausführung führt eine Vergrößerung der wenigstens einen Pouchzelle in der Hauptrichtung zu einer Verlagerung des Detektierelements in Richtung des Sensors, so dass ein Abstand zwischen dem Detektierelement und dem Sensor reduziert wird.

Um eine sichere Detektion einer kritischen Vergrößerung der wenigstens einen Pouchzelle zu erzielen, kann der Sensor zur kontaktgebundenen Detektion des Detektierelements ausgeführt sein. Der Sensor detektiert in diesem Fall das Detektierelement, wenn es mit dem Sensor in Kontakt kommt und ein Abstand zwischen dem Detektierelement und dem Sensor gleich Null ist. Alternativ hierzu kann es auch vorgesehen sein, dass der Sensor zur kontaktlosen Detektion des Detektierelements ausgeführt ist und das Detektierelement detektiert, wenn der Abstand zwischen dem Detektierelement und dem Sensor kleiner als ein vorgegebener Schwellwert ist. Der Sensor ist insbesondere zur sofortigen und/oder reversiblen Detektion des Detektierelements ausgeführt.

Zur einfachen und sicheren Detektion des Detektierelements kann der Sensor mit einem Material ausgeführt sein, das bei einer Kontaktierung durch das Detektierelement einen Widerstand verändert. Hierbei kann es vorgesehen sein, dass eine Änderung des Widerstands direkt oder über einen Spannungsteiler ermittelt wird.

Bei einer konstruktiv einfachen Ausführung ist der Sensor an einer weiteren Wand der Gehäuseeinrichtung und insbesondere zumindest bereichsweise in einer Ausnehmung der weiteren Wand der Gehäuseeinrichtung angeordnet. Durch die Anordnung des Sensors in der Ausnehmung ist die Wahrscheinlichkeit des Auftretens einer unbeabsichtigten Detektion oder eines unbeabsichtigten Kontakts reduziert.

Um auf konstruktiv einfache Weise eine unerwünschte Detektion des Detektierelements durch den Sensor sicher zu verhindern, die aufgrund von äußeren Krafteinwirkungen und nicht auf einer Vergrößerung der wenigstens einen Pouchzelle beruht, kann wenigstens eine Federeinrichtung vorgesehen sein, die das Detektierelement direkt oder indirekt mit einer Kraft beaufschlagt, die das Detektierelement in eine dem Sensor abgewandte Richtung drückt. Die wenigstens eine Federeinrichtung ist dabei insbesondere zwischen dem plattenförmigen Element und der weiteren Wand der Gehäuseeinrichtung angeordnet. Eine Federstärke der wenigstens einen Federeinrichtung ist dabei derart gewählt, dass das Detektierelement in gewünschtem Umfang bei einer Vergrößerung der wenigstens einen Pouchzelle in der Hauptrichtung in Richtung des Sensors verlagert wird. Das Vorsehen der wenigstens einen Federeinrichtung hat weiterhin den Vorteil, dass eine Performance der wenigstens einen Pouchzelle durch die Beaufschlagung der Pouchzellen mit Druck verbessert ist.

Bei einer bevorzugten Ausführung sind mehrere Federeinrichtungen vorgesehen, die insbesondere derart angeordnet sind, dass eine möglichst gleichmäßige Krafteinleitung erzielt ist. Beispielsweise sind vier Federeinrichtungen vorgesehen, von denen jeweils eine Federeinrichtung einem Eckbereich eines im Wesentlichen rechteckig ausgeführten plattenförmigen Elements zugeordnet ist.

Wenigstens eine Federeinrichtung kann dabei als Spiralfeder oder als Tellerfeder ausgeführt sein, wobei insbesondere mittels wenigstens einer Tellerfeder eine bauraumgünstige Anordnung ermöglicht ist.

Bei einer bevorzugten Ausführung ist die wenigstens eine Pouchzelle vorzugsweise zumindest bereichsweise innerhalb eines von der Gehäuseeinrichtung begrenzten Raumes angeordnet. Die Gehäuseeinrichtung ist dabei sehr flexibel ausführbar und kann beispielsweise einen das Akkupack aufweisenden Raum von wenigstens drei Seiten begrenzen. Die Gehäuseeinrichtung kann dabei in wenigstens eine, vorzugsweise von der Hauptrichtung abweichende Richtung offen ausgeführt sein, so dass beispielsweise eine Anordnung des Akkupacks in der Gehäuseeinrichtung vereinfacht ist.

Zur insbesondere aktiven Deaktivierung der Akkupackvorrichtung bei einer Detektion des Detektierelements durch den Sensor kann eine Steuereinrichtung vorgesehen sein, mittels welcher der Akkupack ansteuerbar ist, wobei die Detektiereinrichtung mit der Steuereinrichtung wirkverbunden ist. Hierbei kann auf einfache Weise sichergestellt werden, dass im Falle der Detektion des Detektierelements durch den Sensor von der Steuereinrichtung ein weiterer Betrieb des Akkupacks unterbunden wird.

Um einen weiteren Betrieb des Akkupacks sicher zu verhindern, wenn der Sensor das Detektierelement detektiert, kann bei einer bevorzugten Ausführung eine Abschalteinrichtung vorgesehen sein, die Teil eines den Akkupack ansteuernden Stromkreises ist, wobei die Abschalteinrichtung zur mechanischen Unterbrechung des Stromkreises bei einer Detektion des Detektierelements durch den Sensor ausgeführt ist. Eine insbesondere passiv wirkende Abschalteinrichtung kann beispielsweise ein Schutzelement in Form einer Sicherung oder einer Schmelzsicherung aufweisen, die den Stromkreis, in den der Akkupack eingebunden ist, bei einer Detektion der definierten Vergrößerung der wenigstens einen Pouchzelle trennt und ein weiteres Betreiben des Akkupacks sicher verhindert. Hierzu kann der Sensor beispielsweise mit einem sogenannten FET bzw. MOSFET verbunden sein, der bei Detektion des Detektierelements ein Heizelement der Schmelzsicherung betätigt, so dass die Sicherung auslöst.

Es wird weiterhin ein Verfahren zum Betreiben einer derartigen Akkupackvorrichtung vorgeschlagen, wobei eine Gehäuseeinrichtung und ein wenigstens eine Pouchzelle aufweisender Akkupack vorgesehen ist, wobei eine Detektiereinrichtung mit einem an das Akkupack gekoppelten Detektierelement und einem gehäusefest angeordneten Sensor vorgesehen sind, und wobei der Sensor zur Detektion des Detektierelements bei Unterschreiten eines definierten Abstands zwischen dem Detektierelement und dem Sensor ausgeführt ist. Dabei wird vorgeschlagen, dass ein Betrieb des Akkupack verhindert wird, wenn ein Abstand zwischen dem Detektierelement und dem Sensor über einen definierten Zeitraum kleiner als der definierte Abstand ist.

Hierdurch ist ein sicherer Betrieb einer Akkupackvorrichtung erzielt, da mittels der Detektiereinrichtung eine durch eine Vergrößerung wenigstens einer Pouchzelle verursachte Detektion des Detektierelements von dem Sensor sicher ermittelt wird und ein weiterer Betrieb des Akkupacks bei einer Vergrößerung wenigstens einer Pouchzelle mit der Gefahr der Beschädigung des Akkupacks und dem Auftreten eines Feuers verhindert ist. Eine beispielsweise auf eine äußere Krafteinwirkung zurückgehende Detektion des Detektierelements durch den Sensor ist sicher verhindert, da eine derartige Detektion meist nur kurzfristig vorliegt und durch eine entsprechende Wahl des Zeitraums nicht zu einer Deaktivierung des Akkupacks führt.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein vereinfacht gezeigtes Ausführungsbeispiel einer Akkupackvorrichtung mit einem mehrere Pouchzellen aufweisenden Akkupack, der in einer Gehäuseeinrichtung angeordnet ist;
- Fig. 2: eine vereinfachte Darstellung der Akkupackvorrichtung gemäß Fig. 1, wobei die Pouchzellen in einer Hauptrichtung vergrößert sind;
- Fig. 3: eine vereinfacht gezeigte Schnittdarstellung durch die Akkupackvorrichtung gemäß Fig. 1 entlang der Linie III-III; und
- Fig. 4: ein vereinfachtes Schaubild eines Stromkreises, in den eine Detektiereinrichtung der Akkupackvorrichtung eingebunden ist.

### Ausführungsbeispiele:

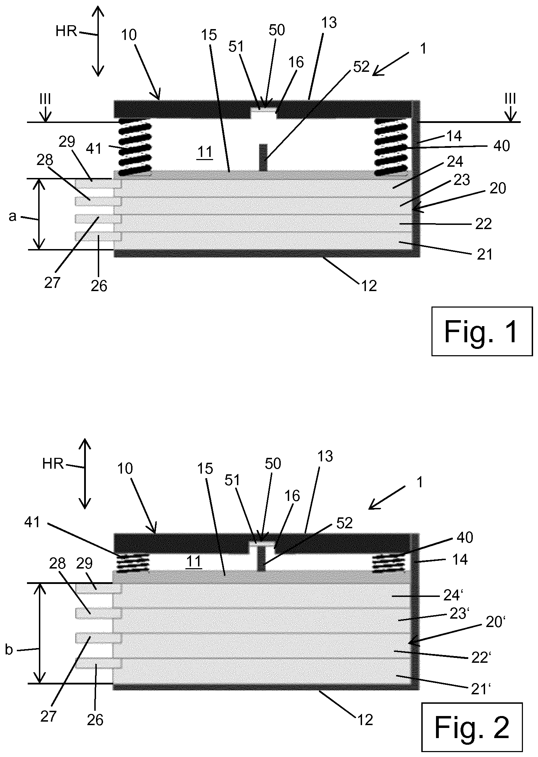

In den Figuren 1 bis 3 ist eine Akkupackvorrichtung 1 für eine elektrische Handwerkzeugmaschine gezeigt, die eine Gehäuseeinrichtung 10 und einen Akkupack 20 aufweist. Der Akkupack 20 weist im vorliegend dargestellten Ausführungsbeispiel vier identisch ausgeführte Pouchzellen 21, 22, 23, 24 auf, wobei bei alternativen Ausführungen auch weniger, beispielsweise zwei oder drei oder mehr als vier vorgesehen sein können. Die Pouchzellen 21, 22, 23, 24 sind zumindest teilweise, vorliegend annähernd vollständig in einem von der Gehäuseeinrichtung 10 gebildeten Innenraum 11 gestapelt angeordnet.

In Fig. 1 sind die Pouchzellen 21, 22, 23, 24 in neuem, das heißt nicht ausgedehntem Zustand, dargestellt. Fig. 2 zeigt wiederum den Akkupack 20 mit gealterten, aufgeblähten Zellen 21', 22', 23', 24'. Wie der Zusammenschau der Fig. 1 und Fig. 2 zu entnehmen ist, ist eine Stapelhöhe a beim neuwertigen Akkupack 20 geringer als eine Stapelhöhe b des gealterten Akkupacks 20' in Fig. 2. Die Pouchzellen 21 bis 24 sind insbesondere als Lithium-Polymerzellen ausgeführt und über Kontaktfahnen 26, 27, 28, 29 miteinander elektrisch kontaktiert.

Während eines Betriebs der Pouchzellen 21, 22, 23,24 kann es im Rahmen eines Alterungsprozesses zu einer Gasbildung innerhalb der Pouchzellen 21, 22, 23,24 kommen. Diese Gase können beispielsweise bei einer Elektrolyt-Zersetzung oder aufgrund einer Belastung der Pouchzellen 21, 22, 23, 24 insbesondere bei einer Überladung, einem Kurzschluss oder einer Überhitzung auftreten. Durch diese Gase baut sich innerhalb einer äußeren Hülle der Pouchzellen 21, 22, 23, 24 ein Druck auf, so dass sich ein Volumen innerhalb der äußeren Hülle der Pouchzellen 21, 22, 23, 24 vergrößert. Dies wird auch als Swelling bezeichnet. Die Pouchzellen 21, 22, 23, 24 vergrößern sich hierdurch insbesondere in einer Hauptrichtung HR. Werden die vergrößerten Pouchzellen 21', 22', 23', 24' weiter betrieben, kann der Druck innerhalb der äußeren Hülle der jeweiligen Pouchzelle 21', 22', 23', 24' ein kritisches Drucklevel erreichen bzw. übersteigen, so dass die äußere Hülle der Pouchzelle 21', 22', 23', 24' hierdurch beschädigt wird und/oder unkontrolliert aufplatzen kann. In diesem Fall kann aus der äußeren Hülle austretendes Elektrolyt in Kontakt mit einer Zündquelle, beispielsweise einem heißen Zellverbinder, kommen und hierdurch entflammen. Nach dem Aufplatzen funktionieren Pouchzellen 21, 22, 23, 24 weiterhin, weshalb ein thermisches Durchgehen entstehen kann. Mit der beschriebenen Lösung kann sicher verhindert werden, dass die Pouchzellen 21, 22, 23, 24 während eines Betriebs beschädigt werden und die oben genannten Nachteile auftreten.

Die Gehäuseeinrichtung 10 weist vorliegend wenigstens eine Wand 12 und eine der Wand 12 gegenüberliegende und insbesondere im Wesentlichen parallel zu der Wand 12 angeordnete weitere Wand 13 auf, die durch eine im Wesentlichen senkrecht zu den Wänden 12, 13 angeordnete zusätzlich Wand 14 fest miteinander verbunden sind. Der Akkupack 20 und vorliegend die Pouchzelle 21 liegen hier direkt und insbesondere flächig an der Wand 12 an. Bei alternativen Ausführungen der Erfindung kann der Innenraum 11 durch weitere, insbesondere senkrecht zu allen Wänden 12, 13, 14 angeordnete Wände begrenzt sein. Zudem kann es auch vorgesehen sein, dass die einzelnen Wände 12, 13, 14 eine oder mehrere Ausnehmungen aufweisen.

Es ist weiterhin ein plattenförmiges Element 15 vorgesehen, welches im Wesentlichen parallel zu den Wänden 12 und 13 angeordnet ist. Das plattenförmige Element 15 liegt vorliegend ebenfalls an dem Akkupack 20, hier insbesondere flächig an der Pouchzelle 24 an, so dass der Akkupack 20 in Hauptrichtung HR von der Wand 12 und dem plattenförmigen Element 15 eingefasst ist und hierdurch eine Stapelhöhe a bzw. b des Akkupack 20 bzw. 20' definiert ist.

Das plattenförmige Element 15 ist relativ zu den Wänden 12 und 13 der Gehäuseeinrichtung 10 verlagerbar. Hierbei kann es vorgesehen sein, dass das plattenförmige Element 15 frei zu den Wänden 12, 13 bewegbar ist oder eine Führungseinrichtung zur gezielten Verlagerung des plattenförmigen Elements 15 vorgesehen ist.

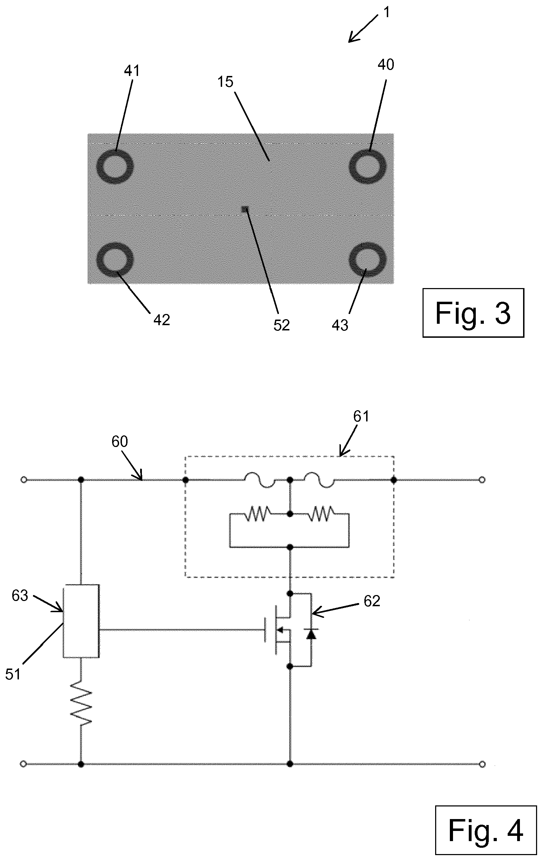

Um sicherzustellen, dass der Akkupack 20 sowohl im Grundzustand bzw. neuem Zustand der Pouchzellen 21, 22, 23, 24 gemäß Fig. 1 als auch im gealterten, aufgeblähten Zustand der Pouchzellen 21', 22', 23' 24' gemäß Fig. 2 jeweils in Hauptrichtung HR anliegend zwischen dem plattenförmigen Element 15 und der Wand 12 angeordnet ist, sind vorliegend vier als Spiralfedern ausgeführte Federeinrichtungen 40, 41, 42, 43 vorgesehen, welche in Hauptrichtung HR zwischen der weiteren Wand 13 und dem plattenförmigen Element 15 angeordnet sind und das plattenförmige Element 15 mit einer das plattenförmige Element 15 in Richtung der Wand 12 drückenden Kraft beaufschlagen. Um eine gleichmäßige Beaufschlagung des plattenförmigen Elements 15 durch die Federeinrichtungen 40, 41, 42, 43 zu erzielen, ist vorliegend, wie in Fig. 3 näher ersichtlich ist, jeweils eine Federeinrichtung 40, 41, 42, 43 in einem Eckbereich des hier im Wesentlichen rechteckig ausgeführten plattenförmigen Elements 15 angeordnet.

Eine Anzahl und Anordnung der Federeinrichtungen ist grundsätzlich beliebig variierbar und wird insbesondere derart gewählt, dass eine für den jeweiligen Anwendungsfall möglichst gleichmäßige Druckbeaufschlagung des plattenförmigen Elements 15 erzielt wird. Alternativ zum Vorsehen von Spiralfedern können bei alternativen Ausführungen auch andere Bauarten von Federn, beispielsweise wenigstens eine Tellerfeder, vorgesehen sein. Weiterhin kann es vorgesehen sein, dass das plattenförmige Element mehrteilig mit mehreren kleinen Elementen ausgeführt ist, die insbesondere jeweils als Auflagepunkt für eine Federeinrichtung 40, 41, 42, 43 dienen und jeweils gegenüber der Gehäuseeinrichtung 10 verlagerbar sind. Insbesondere sind die Elemente des plattenförmigen Elements dabei derart angeordnet und wirken derart mit Federeinrichtungen zusammen, dass ein von den Federeinrichtungen auf die Pouchzellen 21, 22, 23, 24 wirkender Druck im Wesentlichen gleichverteilt ist.

Um sicher erkennen zu können, wenn der Akkupack 20 eine kritische Stapelhöhe b erreicht hat, d. h., wenn die Pouchzellen 21, 22, 23, 24 gemeinsam eine Größenänderung in Hauptrichtung HR größer als ein definierter Schwellwert aufweisen, ist eine Detektiereinrichtung 50 vorgesehen. Die Detektiereinrichtung 50 weist einen an der weiteren Wand 13, hier in einer Ausnehmung 16 der weiteren Wand 13 angeordneten Sensor 51 und ein an dem plattenförmigen Element 15 angeordnetes Detektierelement 52 auf. Der Sensor 51 ist in einem mittigen Bereich der weiteren Wand 13 und das Detektierelement 52 in einem mittigen Bereich des plattenförmigen Elements 15 angeordnet. Der Sensor 51 und das Detektierelement 52 sind derart zueinander angeordnet, dass das Detektierelement 52 bei einer Verlagerung des plattenförmigen Elements 15 in Hauptrichtung HR größer als ein definierter Wert durch eine entsprechende Vergrößerung des Akkupacks 20 und der einzelnen Pouchzellen 21, 22, 23, 24 in Hauptrichtung HR in Kontakt mit dem Sensor 51 kommt und ein Abstand zwischen dem Detektierelement 52 und dem Sensor 51, zu dem der Sensor 51 das Detektierelement 52 detektiert, vorliegend gleich Null ist. Eine Verlagerung des plattenförmigen Elements 15 in Richtung der weiteren Wand 13 kommt dabei zustande, wenn ein in den Pouchzellen 21, 22, 23, 24 vorliegender Innendruck in Summe größer als die von den Federeinrichtungen 40, 41, 42, 43 auf das plattenförmige Element 15 wirkende Kraft ist.

Der Sensor 51 ist vorliegend als Kontaktsensor ausgeführt, so dass mittels des Sensors 51 ein Kontakt des hier als von dem plattenförmigen Element 15 in Richtung der weiteren Wand 13 hervorstehenden und als Detektierspitze ausgeführten Detektierelements 52 mit dem Sensor 51 detektierbar ist. Der Sensor 51 kann dabei beispielsweise mit einem Material ausgeführt sein, das bei einem Kontakt bzw. bei einer Druckbeaufschlagung durch das Detektierelement 52 einen Widerstand ändert. Eine derartige Widerstandsänderung kann beispielsweise direkt oder mittels eines Spannungsteilerkreislaufes erkannt und ein Kontakt des Detektierelements 52 mit dem Sensor 51 ermittelt werden. Der Sensor 51 kann hierzu mit einer Folie ausgeführt sein, die ein derartiges Material aufweist.

Ein Kontakt des Detektierelements 52 mit dem Sensor 51 ist hierbei unverzüglich und reversibel detektierbar, wobei beispielsweise eine Steuereinrichtung einen weiteren Betrieb des Akkupacks 20 erst verhindert, wenn ein Kontakt des Detektierelements 52 mit dem Sensor 51 länger als ein vorgegebener definierter Zeitraum vorliegt.

Fig. 4 zeigt schematisch einen Ausschnitt eines Stromkreises 60, in den der Akkupack 20 eingebunden ist. Der Stromkreis 60 ist mit einer Abschalteinrichtung 61, einer als FET ausgeführten Schaltereinrichtung 62 und einer den Sensor 51 aufweisenden Sensoreinrichtung 63 ausgebildet. Wenn das Detektierelement 51 von dem Sensor 51 detektiert wird, steigt eine Spannung an einem Ausgang der Sensoreinrichtung 63, durch die die Schaltereinrichtung 62 aktiviert wird und ein Strom in Richtung der Abschalteinrichtung 61 fließt. Der Strom fließt durch ein Heizelement der Abschalteinrichtung 61 und eine Schmelzsicherung der Abschalteinrichtung 61 schmilzt, so dass ein weiterer Betrieb des Akkupacks 20 durch eine mechanische Trennung des Stromkreises 60 sicher unterbunden ist.

### Bezugszeichenliste

- 1: Akkupackvorrichtung
- 10: Gehäuseeinrichtung
- 11: Innenraum
- 12: Wand
- 13: weitere Wand
- 14: zusätzliche Wand
- 15: plattenförmiges Element
- 16: Ausnehmung der weiteren Wand
- 20: Akkupack(neu)
- 20': Akkupack (aufgebläht)
- 21, 22, 23, 24: Pouchzelle (neu)
- 21', 22', 23', 24': Pouchzelle (aufgebläht)
- 26, 27, 28, 29: Kontaktfahne
- 40, 41, 42, 43: Federeinrichtung; Spiralfeder
- 50: Detektiereinrichtung
- 51: Sensor
- 52: Detektierelement
- 60: Stromkreis
- 61: Abschalteinrichtung
- 62: Schaltereinrichtung
- 63: Sensoreinrichtung
- a, b: Stapelhöhe
- HR: Hauptrichtung

## Patentansprüche

1. Akkupackvorrichtung (1) für eine elektrische Handwerkzeugmaschine mit einer Gehäuseeinrichtung (10) und einem wenigstens eine Pouchzelle (21, 22, 23, 24) aufweisenden Akkupack (20),
**dadurch gekennzeichnet, dass** eine Detektiereinrichtung (50) mit einem an das Akkupack (20) gekoppelten Detektierelement (52) und einem gehäusefest angeordneten Sensor (51) vorgesehen sind, wobei der Sensor (51) zur Detektion des Detektierelements (52) bei Unterschreiten eines definierten Abstands zwischen dem Detektierelement (52) und dem Sensor (51) ausgeführt ist.

2. Akkupackvorrichtung nach Anspruch 1,
**dadurch gekennzeichnet, dass** die Detektiereinrichtung (50) an einem plattenförmigen, an dem Akkupack (20) anliegenden Element (15) angeordnet ist, das gegenüber der Gehäuseeinrichtung (10) verlagerbar ist und mit einer Wand (12) der Gehäuseeinrichtung (10) einen die wenigstens eine Pouchzelle (21, 22, 23, 24) aufweisenden Raum (11) begrenzt.

3. Akkupackvorrichtung nach einem der Ansprüche 1 oder 2,
**dadurch gekennzeichnet, dass** der Sensor (51) zur kontaktgebundenen Detektion des Detektierelements (52) ausgeführt ist.

4. Akkupackvorrichtung nach Anspruch 3,
**dadurch gekennzeichnet, dass** der Sensor (51) mit einem Material ausgeführt ist, das bei einer Kontaktierung einen Widerstand verändert.

5. Akkupackvorrichtung nach einem der Ansprüche 1 bis 4,
**dadurch gekennzeichnet, dass** der Sensor (51) an einer weiteren Wand (13) der Gehäuseeinrichtung (10) und insbesondere zumindest bereichsweise in einer Ausnehmung (16) der weiteren Wand (13) der Gehäuseeinrichtung (10) angeordnet ist.

6. Akkupackvorrichtung nach einem der Ansprüche 1 bis 5,
**dadurch gekennzeichnet, dass** wenigstens eine Federeinrichtung (40, 41, 42, 43) vorgesehen ist, die das Detektierelement (52) mit einer Kraft beaufschlagt, die das Detektierelement (52) in eine dem Sensor (51) abgewandte Richtung drückt.

7. Akkupackvorrichtung nach Anspruch 6,
**dadurch gekennzeichnet, dass** die wenigstens eine Federeinrichtung (40, 41, 42, 43) als Spiralfeder oder als Tellerfeder ausgeführt ist.

8. Akkupackvorrichtung nach einem der Ansprüche 1 bis 7,
**dadurch gekennzeichnet, dass** die wenigstens eine Pouchzelle (21, 22, 23,24) zumindest bereichsweise innerhalb eines von der Gehäuseeinrichtung (10) begrenzten Raumes (11) angeordnet ist.

9. Akkupackvorrichtung nach einem der Ansprüche 1 bis 8,
**dadurch gekennzeichnet, dass** eine Steuereinrichtung vorgesehen ist, mittels welcher der Akkupack (20) ansteuerbar ist, wobei die Detektiereinrichtung (50) mit der Steuereinrichtung wirkverbunden ist.

10. Akkupackvorrichtung nach einem der Ansprüche 1 bis 9,
**dadurch gekennzeichnet, dass** eine Abschalteinrichtung (61) vorgesehen ist, die Teil eines den Akkupack (20) ansteuernden Stromkreises (60) ist, wobei die Abschalteinrichtung (61) zur mechanischen Unterbrechung des Stromkreises (60) bei einer Detektion des Detektierelements (52) durch den Sensor (51) ausgeführt ist.

11. Verfahren zum Betreiben einer Akkupackvorrichtung (1) nach einem der Ansprüche 1 bis 10, wobei eine Gehäuseeinrichtung (10) und ein wenigstens eine Pouchzelle (21, 22, 23, 24) aufweisender Akkupack (20) vorgesehen ist und die wenigstens eine Pouchzelle (21, 22, 23, 24) zumindest bereichsweise innerhalb eines von der Gehäuseeinrichtung (10) begrenzten Raumes (11) angeordnet ist, wobei eine Detektiereinrichtung (50) mit einem an das Akkupack (20) gekoppelten Detektierelement (52) und einem gehäusefest angeordneten Sensor (51) vorgesehen sind, und wobei der Sensor (51) zur Detektion des Detektierelements (52) bei Unterschreiten eines definierten Abstands zwischen dem Detektierelement (52) und dem Sensor (51) ausgeführt ist, **dadurch gekennzeichnet, dass** der Akkupack (20) außer Betrieb genommen wird, wenn ein Abstand zwischen dem Detektierelement (52) und dem Sensor (51) über einen definierten Zeitraum kleiner als der definierte Abstand ist.
